# EUROPEAN PATENT APPLICATION

(11) **EP 4 769 802 A1**
(43) Date of publication of application: **01.07.2026**
(21) Application number: 25845167.3
(22) Date of filing: 30.06.2025
(51) Int. Cl.: H01M 50/516, H01M 50/503, H01M 50/531, H01M 50/271, B23K 26/21, B23K 26/322, B23K 37/04

(54) **BATTERY MODULE, AND ELECTRODE LEAD WELDING METHOD OF BATTERY CELLS INCLUDED IN BATTERY MODULE**

(30) Priority: 23.07.2024 KR 20240096923
(71) Applicant: LG Energy Solution, Ltd., Seoul 07335 (KR)
(72) Inventor: SEON, Sang-Ok, Daejeon 34122 (KR); KIM, Seon-Woo, Daejeon 34122 (KR); KIM, Jee-Won, Daejeon 34122 (KR); SHIN, Jae-Wook, Daejeon 34122 (KR); HWANG, Jae-Cheol, Daejeon 34122 (KR)
(74) Representative: Plasseraud IP
(86) International application number: PCT/KR2025/009190
(87) International publication number: WO 2026/023903

(57) **Abstract**

Disclosed is a battery module, which includes a cell stack including a plurality of battery cells, each of which has an electrode lead; a cover frame having a slit through which the electrode lead passes and configured to cover a front portion or a rear portion of the cell stack; and a lead bonding portion provided on an outer side of the cover frame and formed by overlapping the electrode leads of the battery cells so that at least a portion of the overlapping electrode leads is welded, wherein the cover frame includes a lead support unit configured to provide a pressing force from a rear surface of the lead bonding portion toward a front surface thereof so that the overlapping electrode leads come into close contact with the lead bonding portion

## Description

### TECHNICAL FIELD

The present disclosure relates to a battery, and more specifically, to a battery module in which electrode leads of battery cells are welded without a bus bar and a method for welding electrode leads of the battery cells.

This application is based on and claims priority from Korean Patent Application No. 10-2024-0096923, filed on July 23, 2024, with the Korean Intellectual Property Office, the disclosure of which is incorporated herein in its entirety by reference.

### BACKGROUND ART

A semi-permanent battery that converts electrical energy into chemical energy and can be repeatedly charged and discharged is called a secondary battery so as to be distinguished from a primary battery that cannot be reused after a single use.

Secondary batteries include lithium secondary batteries, nickel-cadmium (Ni-Cd) batteries, lead-acid batteries, nickel-metal hydride (Ni-MH) batteries, zinc-air batteries, and alkaline manganese batteries. Among them, lead-acid batteries and lithium secondary batteries are the most actively commercialized secondary batteries.

In particular, lithium secondary batteries have been actively utilized as electric vehicle batteries recently due to their advantages such as high energy storage density, lightweight and miniaturized design, excellent safety, low discharge rate, and long lifespan. For reference, lithium secondary batteries are generally classified into cylindrical, square, and pouch types depending on their manufacturing form, and their applications range from electric vehicle batteries to ESS batteries and other electrical devices.

Currently, a single lithium secondary battery (cell) cannot generate enough power to drive an electric vehicle. In order to use a secondary battery as an energy source for an electric vehicle, a battery module must be formed by connecting a plurality of lithium-ion battery cells in series and/or in parallel. Typically, the battery pack is configured to include a BMS (Battery Management System) that connects the battery modules in series and maintains their functionality, a cooling system, a BDU (Battery Disconnection Unit), electrical wiring cables, etc.

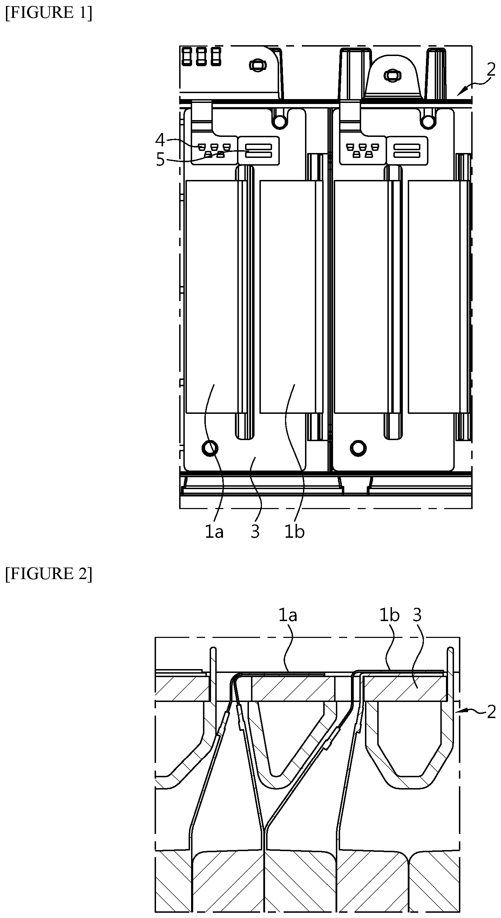

Meanwhile, as shown in FIG. 1, when configuring a battery module with pouch-type secondary batteries, electrode leads 1a, 1b of the pouch-type secondary batteries are laser welded to a bus bar 3. Here, the bus bar 3 refers to a conductor made of a metal material such as copper and generally manufactured in a bar or square shape.

The pouch-type secondary batteries are stacked in one direction with its wide surface erected, forming a cell stack, and a bus bar frame 2 may be arranged at the front and/or rear side of the cell stack. The bus bar frame 2 is made of an electrically insulating material, has a slit through which the electrode leads 1a, 1b may pass, and is provided so that a plurality of bus bars 3 may be mounted on the outer surface. That is, the bus bars 3 may be mounted on the outer surface of the bus bar frame 2, and a plurality of electrode leads 1a, 1b are welded to each bus bar, so that the secondary batteries may be connected in series and/or in parallel.

In addition, the voltage information of the secondary batteries in the battery module is transmitted to the BMS through the sensing member 4 connected to each bus bar 3, and the BMS monitors the state of each secondary battery based on the voltage information and controls the charging and discharging of the secondary batteries.

Harness wires, FFC (Flat Flexible Cable), or FPCB (Flexible Printed Circuit Board) are used as the sensing member 4. Conventionally, one side of the sensing plate 5 is compressed to the end of the sensing member 4, and the other side of the sensing plate 5 is welded to the bus bar 3. However, the battery module manufacturing method that connects the electrode leads 1a, 1b and the sensing plate 5 via the bus bars 3 has the disadvantage of increasing the manufacturing cost and weight.

### DISCLOSURE

### Technical Problem

The present disclosure is designed to solve the problems of the related art, and therefore the present disclosure is directed to providing a battery module in which battery cells are electrically connected by welding electrode leads of the battery cells without using a bus bar.

In addition, the present disclosure is directed to providing an electrode lead welding method that may weld electrode leads in close contact without a bus bar.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module comprising: a cell stack including a plurality of battery cells, each of which has an electrode lead; a cover frame having a slit through which the electrode lead passes and configured to cover a front portion or a rear portion of the cell stack; and a lead bonding portion provided on an outer side of the cover frame and formed by overlapping the electrode leads of the battery cells so that at least a portion of the overlapping electrode leads is welded, wherein the cover frame includes a lead support unit configured to provide a pressing force from a rear surface of the lead bonding portion toward a front surface thereof so that the overlapping electrode leads come into close contact with the lead bonding portion.

The lead support unit may include an elastic member that is coupled to a plate surface of the cover frame and elastically presses the lead bonding portion.

The elastic member may include a support block in contact with the rear surface of the lead bonding portion; and a spring having one end connected to the plate surface of the cover frame and the other end connected to the support block.

The support block may include a spring connection portion connected to the spring; a first lead support portion extending from one side of the spring connection portion toward the lead bonding portion; and a second lead support portion spaced apart from the first lead support portion and extending from the other side of the spring connection portion toward the lead bonding portion.

The spring connection portion may be configured to be spaced apart from the lead bonding portion by a predetermined interval.

The cover frame may include a first guide plate and a second guide plate spaced apart from each other and arranged side by side to protrude from the plate surface of the cover frame, and the elastic member may be arranged in a space between the first guide plate and the second guide plate.

The elastic member may include a support block in contact with the rear surface of the lead bonding portion; and a spring having one end connected to the plate surface of the cover frame and the other end connected to the support block, and the support block may have a width corresponding to an interval between the first guide plate and the second guide plate.

The cover frame may have the slit on at least one of a left side and a right side of the lead support unit.

In another aspect of the present disclosure, there is also provided an electrode lead welding method for bonding electrode leads between battery cells, comprising: preparing a cover frame, which includes a slit through which the electrode lead passes and an elastic member configured to elastically press the electrode lead; inserting two or more electrode leads into the slit and drawing the electrode leads from a rear side of the cover frame to a front side thereof; compressing the elastic member; bending the two or more electrode leads that have passed through the slit to be overlapped with each other to form a lead bonding portion, and positioning the lead bonding portion in front of the compressed elastic member; releasing the compression of the elastic member so that a rear surface of the lead bonding portion is pressed and pressing a front surface of the lead bonding portion using a welding jig so that the front surface of the lead bonding portion is pressed; and performing welding on the lead bonding portion through a through hole provided in the welding jig.

The elastic member may include a support block in contact with the rear surface of the lead bonding portion; and a spring having one end connected to a plate surface of the cover frame and the other end connected to the support block.

The support block may be formed to be convex with respect to the rear surface of the lead bonding portion to have a pocket space therein, and a spring compressing jig may be inserted into the pocket space and the support block is pushed using the spring compressing jig to compress the spring toward the plate surface of the cover frame.

The cover frame may include a first guide plate and a second guide plate configured to protrude from a plate surface of the cover frame and spaced apart from each other, and the elastic member may be arranged in a space between the first guide plate and the second guide plate.

The elastic member may include a support block in contact with the rear surface of the lead bonding portion; and a spring having one end connected to the plate surface of the cover frame and the other end connected to the support block, and the support block may have a width corresponding to an interval between the first guide plate and the second guide plate.

The slit may be provided on at least one of a left side and a right side of the elastic member based on the elastic member.

In still another aspect of the present disclosure, there is also provided a battery pack comprising the battery module described above.

### Advantageous Effects

According to the present disclosure, a battery module may be provided in which battery cells are electrically connected by welding the electrode leads of the battery cells without using a bus bar.

In addition, an electrode lead welding method that may weld electrode leads in close contact without a bus bar may be provided.

The effects of the present disclosure are not limited to the above effects, and effects not mentioned herein may be clearly understood by a person having ordinary skill in the art from this specification and the attached drawings.

### DESCRIPTION OF DRAWINGS

FIG. 1 is a drawing showing a portion of a battery module according to the prior art, and depicts a bus bar and electrode leads welded to the bus bar.
FIG. 2 is a cross-sectional view showing a portion of a battery module according to the prior art.
FIG. 3 is a front perspective view showing main components of a battery module according to an embodiment of the present disclosure.
FIG. 4 is a drawing showing the connection structure between a cover frame and electrode leads in a battery module according to an embodiment of the present disclosure.
FIG. 5 is a drawing showing a cover frame according to an embodiment of the present disclosure.
FIG. 6 is a drawing showing the main components of a lead support unit of the cover frame according to an embodiment of the present disclosure.
FIGS. 7 to 9 are process diagrams for illustrating an electrode lead welding process according to an embodiment of the present disclosure.
FIG. 10 is a perspective view corresponding to FIG. 9, showing a lead bonding portion pressurized by a welding jig and an elastic member.
FIGS. 11 and 12 are drawings corresponding to FIGS. 8 and 9, showing the welding process of six electrode leads.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Since the embodiments of the present disclosure are provided to more fully explain the present disclosure to those skilled in the art, the shapes and sizes of components in the drawings may be exaggerated, omitted, or schematically illustrated for clearer explanation. Accordingly, the sizes and proportions of each component do not entirely reflect the actual sizes or proportions.

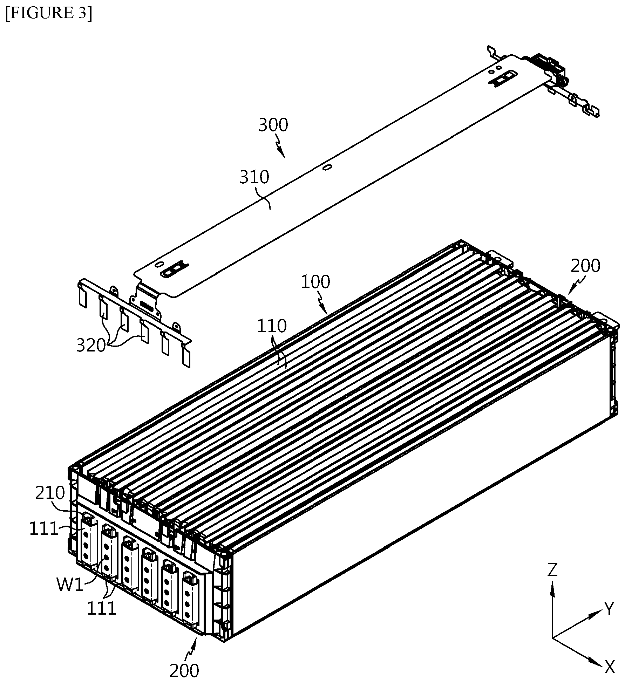

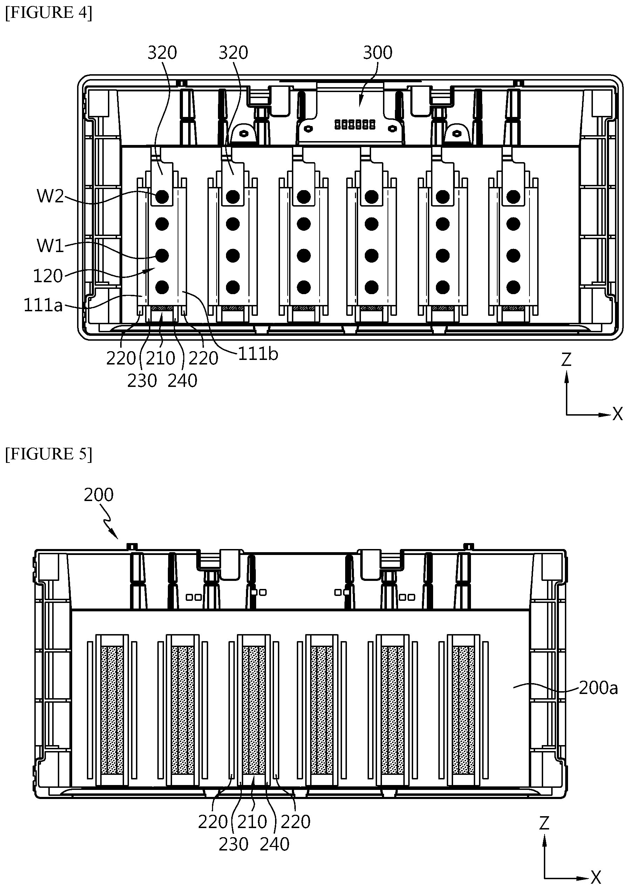

FIG. 3 is a front perspective view showing main components of a battery module according to an embodiment of the present disclosure, FIG. 4 is a drawing showing the connection structure between a cover frame and electrode leads in a battery module according to an embodiment of the present disclosure, and FIG. 5 is a drawing showing a cover frame according to an embodiment of the present disclosure.

Referring to FIGS. 3 to 5, the battery module according to an embodiment of the present disclosure includes a cell stack 100, a cover frame 200, and a voltage sensing unit 300.

The cell stack 100 is an assembly of battery cells 110. The battery cells 110 are respectively erected in the upper and lower direction (±Z) and stacked in the right and left direction (±X) to form the cell stack 100.

A buffer pad or cooling fin may be added between the battery cells 110. The buffer pad or the cooling fin may function to absorb shock or efficiently release heat from each battery cell 110 to the outside. A pouch-type battery cell 110 may be used as the battery cell 110.

The pouch-type battery cell 110 may include an electrode assembly, an electrolyte, and a pouch exterior for sealing and storing them, although not illustrated in detail. The electrode assembly has a stack structure in which positive electrode plates/separators/negative electrode plates/separators are repeatedly stacked, and the positive electrode plates and the negative electrode plates are provided with electrode tabs, and at least one of the electrode tabs is connected to an electrode lead 111. The electrode lead 111 extends from the inside of the pouch exterior to the outside and functions as an electrode terminal of the battery cell 110. Here, the electrode lead 111 collectively refers to a positive electrode lead 111a and a negative electrode lead 111b. The pouch exterior may be made of a metal film, such as an aluminum film, to protect internal components such as the electrode assembly and the electrolyte, and to improve electrochemical properties of the electrode assembly and the electrolyte and heat dissipation properties. The aluminum film may be interposed between an insulating layer made of an insulating material and an internal adhesive layer to ensure electrical insulation.

In the battery module according to the present disclosure, the electrode leads 111 of adjacent battery cells 110 may be overlapped with each other in a predetermined pattern so that the battery cells 110 may be connected in series or in series and parallel.

For example, in the cell stack 100, it is assumed that one battery cell 110 is the N^{th} battery cell 110, other battery cells are N+1^{th}, N+2^{th} ... battery cells 110 in order, and at this time, adjacent battery cells 110 are arranged so that the positive electrode lead 111a and the negative electrode lead 111b face opposite directions. On the front surface of the cell stack 100, the positive electrode lead 111a of the N^{th} battery cell 110 and the negative electrode lead 111b of the N+1^{th} battery cell are overlapped. Also, on the rear surface of the cell stack 100, the positive electrode lead 111a of the N+1^{th} battery cell 110 and the negative electrode lead 111b of the N+2^{th} battery cell 110 are overlapped. By overlapping the electrode leads 111 of the battery cells 110 in this pattern and the electrode leads 111 are bonded using an electrode lead welding method, explained later, the battery cells 110 may be connected in series.

As another example, two or three consecutive battery cells 110 are grouped together, and the same group is arranged so that the polarities face the same direction, and the other groups are arranged so that the polarities face opposite directions. Also, if the electrode leads 111 are bonded in a pattern in which the positive electrode leads 111a of one group and the negative electrode leads 111b of another group are overlapped and then welded together, the battery cells 110 may be connected in series and parallel.

In particular, the battery module according to an embodiment of the present disclosure is configured so that the battery cells 110 are electrically connected by welding the electrode leads 111 without a bus bar (see FIGS. 1 and 2), which is a metal conductor according to the prior art, using the electrode lead welding method, explained later.

That is, the battery module according to an embodiment of the present disclosure has a first welding portion W1 where the electrode leads 111 of the battery cells 110 to be connected are overlapped and directly welded to bond the overlapped electrode leads 111 to each other, instead of welding the electrode leads 111 to the bus bar, unlike the prior art. In other words, there may be one or more first welding portions. In other words, the battery module includes a lead bonding portion 120 formed by overlapping the electrode leads 111 of the battery cells 110 in a predetermined pattern so that at least a portion of the overlapped electrode leads 111 is welded. The welding method performed at this time may adopt, for example, any one of laser welding, ultrasonic welding, and resistance welding.

The cover frame 200 according to an embodiment of the present disclosure may be arranged on the front surface and the rear surface of the cell stack 100 as a means for supporting the cell stack 100.

The cover frame 200 has slits 220 formed at predetermined intervals along the stacking direction (±X) of the battery cells 110. The electrode leads 111 of the battery cells 110 may be drawn out of the cover frame 200 through the slits 220. A portion of the electrode leads 111 that have passed through the slits 220 may be bent to face the plate surface of the cover frame 200. At this time, two or more electrode leads 111 to be electrically connected are overlapped at least partially on the outer side of the cover frame 200 to form a lead bonding portion 120. The electrode leads 111 forming the lead bonding portion 120 may be configured to not be separated from each other by being bonded by the electrode lead welding method, explained later.

The cover frame 200 may include a plurality of lead support units 210 provided at predetermined intervals along the stacking direction (±X) of the battery cells 110, as shown in FIG. 5. The lead support unit 210 is a component that supports the lead bonding portion 120 during the welding process.

The lead support unit 210 may be configured to provide a pressing force from the rear surface of the lead bonding portion 120 toward the front surface so that a gap does not occur between the electrode leads 111 of the lead bonding portion 120. For example, the lead support unit 210 may include an elastic member that is coupled to the plate surface of the cover frame 200 and elastically presses the lead bonding portion 120.

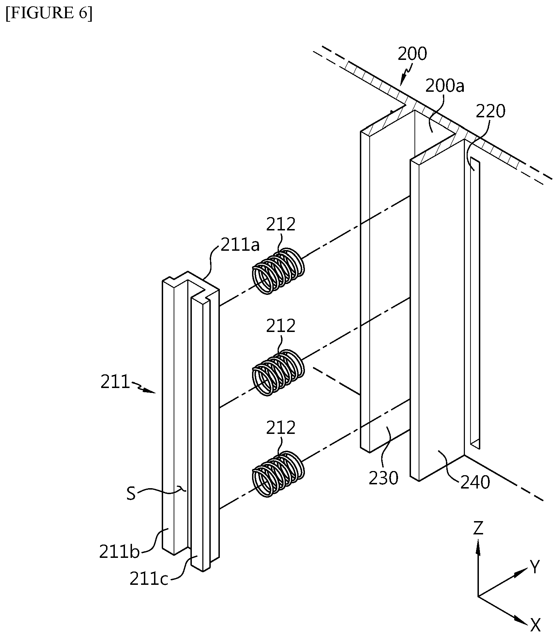

The elastic member may include a support block 211 and a spring 212, as shown in FIG. 6.

The support block 211 may be configured to be in contact with the rear surface of the lead bonding portion 120. For example, the support block 211 may be configured to have a length corresponding to the width of the electrode lead 111 so as to stably support the lead bonding portion 120.

In addition, the support block 211 may include a spring connection portion 211a connected to the spring 212, a first lead support portion 211b extending from one side of the spring connection portion 211a toward the lead bonding portion 120, and a second lead support portion 211c spaced apart from the first lead support portion 211b and extending from the other side of the spring connection portion 211a toward the lead bonding portion 120.

The first lead support portion 211b and the second lead support portion 211c may be configured to have surfaces that face and contact the lead bonding portion 120, respectively. The first lead support portion 211b and the second lead support portion 211c may be configured to support the rear surface of the lead bonding portion 120 while pressing the lead bonding portion 120 by the elastic force of the spring 212. In addition, the spring connection portion 211a may be configured to be spaced apart from the lead bonding portion 120 by a predetermined interval.

The support block 211 of this embodiment is manufactured in an approximately 'U' shape, and a pocket space S may be formed between the support block 211 and the lead bonding portion 120. As will be explained later, by providing the pocket space S, the support block 211 may be prevented from being bonded together with the electrode leads 111.

The spring 212 may employ a coil spring 212 as a means for providing a pressing force to the lead bonding portion 120. The spring 212 may be replaced with a leaf spring instead of the coil spring 212. The spring 212 may be configured to have one end connected to the plate of the cover frame 200 and the other end connected to the support block 211. A plurality of the springs 212 may be provided along the longitudinal direction (Z direction) of the support block 211.

Referring to FIGS. 5 and 6 again, the cover frame 200 includes a first guide plate 230 and a second guide plate 240 that are spaced apart from each other and arranged side by side to protrude from the plate surface of the cover frame 200. The aforementioned elastic member may be arranged in the space between the first guide plate 230 and the second guide plate 240.

The first guide plate 230 and the second guide plate 240 may guide the movement of the elastic member so that the elastic member is blocked by the first guide plate 230 and the second guide plate 240 and moves left and right without distortion when compressed or extended. The first guide plate 230 and the second guide plate 240 may be configured so that the interval therebetween corresponds to the width of the support block 211.

The first guide plate 230 and the second guide plate 240 are configured to protrude further than the support block 211 at least when the spring 212 is fully compressed. In addition, the first guide plate 230 and the second guide plate 240 are configured to have the same protruding length relative to the plate surface of the cover frame 200.

The first guide plate 230 and the second guide plate 240 may serve to support one side and the other side of the lead bonding portion 120 together with the first lead support portion 211b and the second lead support portion 211c of the support block 211.

In the cover frame 200, the slit 220 may be provided on at least one of the left side and the right side of the lead support unit 210, i.e., the elastic member. For example, in this embodiment, the slit 220 may be provided on the left side of the first guide plate 230 or the right side of the second guide plate 240, which protects and guides the elastic member. The electrode leads 111 pass through the adjacent slits 220 and are bent toward the first guide plate 230 or the second guide plate 240, respectively, to form the lead bonding portion 120 at the front of the elastic member.

Meanwhile, the voltage sensing unit 300 refers to a component that senses the node voltage of the electrically connected battery cells 110 and transmits the voltage information of each battery cell 110 to the BMS (not shown, Battery Management System). The BMS may monitor the state of the battery cells 110 through the voltage sensing unit 300 and control the charging and discharging of the battery cells 110.

The voltage sensing unit 300 may include a signal transmission member 310 and a sensing plate 320 (see FIG. 3). The voltage sensing unit 300 may be implemented as a film cable, such as, for example, a flexible printed circuit board (FPCB) or a flat flexible cable (FFC).

The FPCB may be manufactured by placing a copper-clad laminate on a base film and laminating a dry film to form conductor lines at regular intervals through exposure, development, and etching processes, and then bonding a coverlay film. In addition, the FFC may be manufactured by arranging conductor lines at regular intervals on a base film and laminating a coverlay thereon.

The voltage sensing unit 300 in the form of a film cable has excellent conductive performance of the conductor wires and the insulation between the conductor wires is perfectly secured with a single insulating film, so it is possible to process a large amount of signals with a minimum volume.

In this embodiment, the signal transmission member 310 of the voltage sensing unit 300 may be configured to extend in a longitudinal direction (±Y direction) of the cell stack 100 from the upper portion of the cell stack 100. Also, the sensing plates 320 connected to the lead overlapping portions may be provided at both ends of the voltage sensing unit 300. In addition, a connector may be provided at one end of the voltage sensing unit 300. The connector may be connected to a BMS by a cable connector (not shown).

Each of the sensing plates 320 may be connected to a predetermined lead bonding portion 120 in one-to-one relationship (see FIG. 4). At this time, the sensing plate 320 may be directly welded to the lead bonding portion 120. That is, the battery module according to this embodiment has a first welding portion W1 where the positive electrode lead 111a and the negative electrode lead 111b are welded, and a second welding portion W2 where the sensing plate 320 and the lead bonding portion 120 are welded. That is, the battery module according to an embodiment of the present disclosure has a structure in which there is no bus bar, and welding is performed between the electrode leads 111 and between the electrode leads 111 and the sensing plate 320.

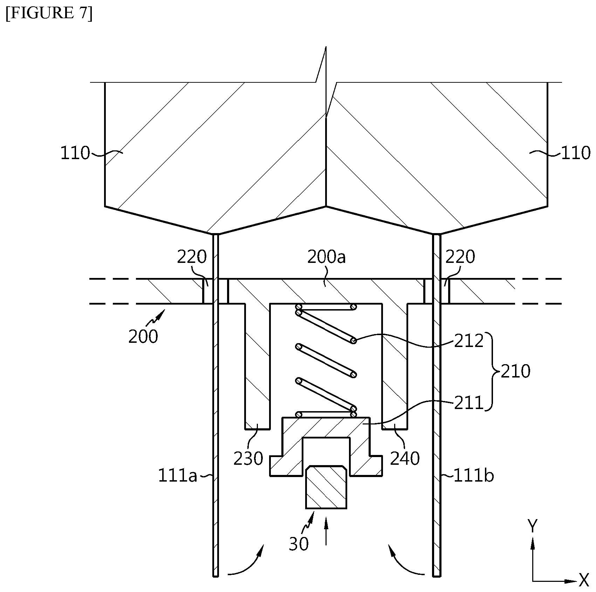

Hereinafter, referring to FIGS. 7 to 10, the electrode lead welding method according to the present disclosure will be described.

The electrode lead welding method according to the present disclosure may be used to manufacture a battery module in which electrode leads 111 are welded without a bus bar, as described above.

The electrode lead welding method may include the steps of: preparing a cover frame 200 having a slit 220 through which an electrode lead 111 may pass and an elastic member capable of elastically pressing the electrode lead 111; inserting two or more of the electrode leads 111 into the slit 220 and drawing the electrode leads 111 out from the rear to the front of the cover frame 200; compressing the elastic member; bending two or more of the electrode leads 111 that have passed through the slit 220 to be overlapped to form a lead bonding portion 120 and positioning the lead bonding portion 120 in front of the compressed elastic member; releasing the compression of the elastic member so that a rear surface of the lead bonding portion 120 is pressed and pressing the front surface of the lead bonding portion 120 using a welding jig 20 so that a front surface of the lead bonding portion 120 is pressed; and performing welding on the lead bonding portion 120 through a through hole 21 provided in the welding jig 20.

More specifically, when two battery cells 110 are to be connected in series, for example, the electrode leads 111 are welded using the electrode lead welding method according to this embodiment as follows.

First, the cover frame 200 described above is prepared, and the positive electrode lead 111a of one battery cell 110 and the negative electrode lead 111b of another battery cell 110 are drawn out from the rear side of the cover frame 200 to the front side through the corresponding slits 220, respectively.

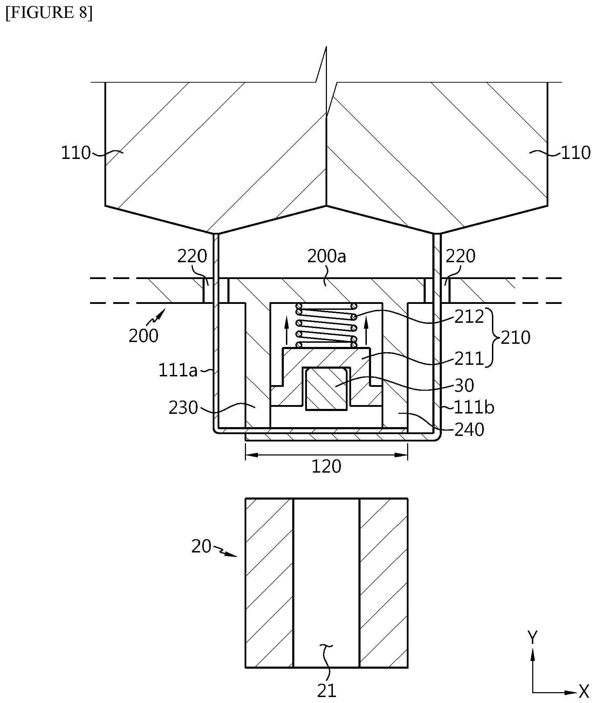

Then, as shown in FIG. 8, the spring 212 is compressed to push the support block 211 into the space between the first guide plate 230 and the second guide plate 240. At this time, a spring compression jig 30 may be used. The spring compression jig 30 is provided in the form of a rod and may be inserted into the pocket space S of the support block 211. The spring compression jig 30 is moved toward the plate surface of the cover frame 200 to compress the spring 212. Here, the pocket space S refers to the empty space surrounded by the first lead support portion 211b, the second lead support portion 211c, and the spring connection portion 211a as described above.

In addition, the positive electrode lead 111a and the negative electrode lead 111b are bent to overlap each other, thereby forming a lead bonding portion 120. At this time, the rear surface of the lead bonding portion 120 is brought to face and contact the ends of the first guide plate and the second guide plate.

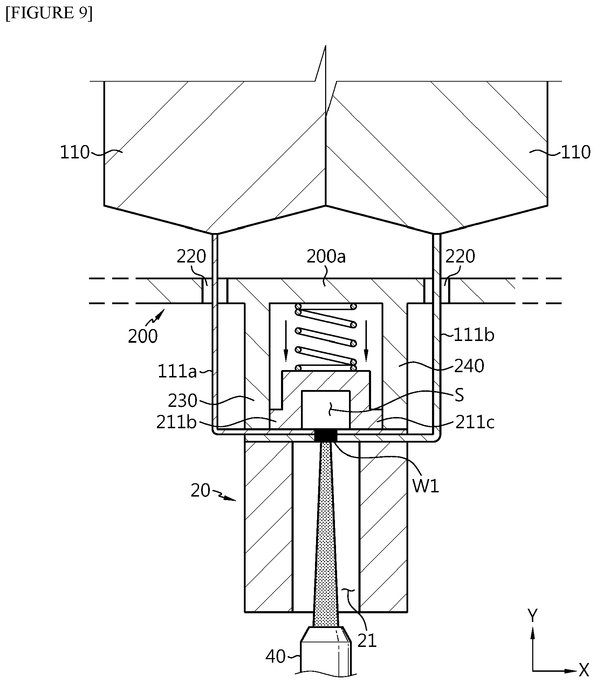

Then, as shown in FIG. 9, the welding jig 20 is brought into close contact with the front surface of the lead bonding portion 120, and the spring compression jig 30 is separated from the support block 211 to release the compression state of the spring 212. Then, the rear surface of the lead bonding portion 120 is pressed by the first lead support portion 211b and the second lead support portion 211c of the support block 211, and the front surface of the lead bonding portion 120 may be pressed by the welding jig 20. In this case, the positive electrode lead 111a and the negative electrode lead 111b are brought into close contact with each other, and no gap occurs between them. In this way, while the positive electrode lead 111a and the negative electrode lead 111b are in close contact, a laser is irradiated on the lead bonding portion 120 using, for example, a laser welding machine 40 to perform laser welding on the positive electrode lead 111a and the negative electrode lead 111b. At this time, the laser is irradiated on the center of the lead bonding portion 120. Since the pocket space S of the support block 211 exists behind the center of the lead bonding portion 120, even if the positive electrode lead 111a and the negative electrode lead 111b are melted, the heat is not directly transmitted to the support block 211. This prevents the support block 211 and the electrode leads 111 from being bonded integrally.

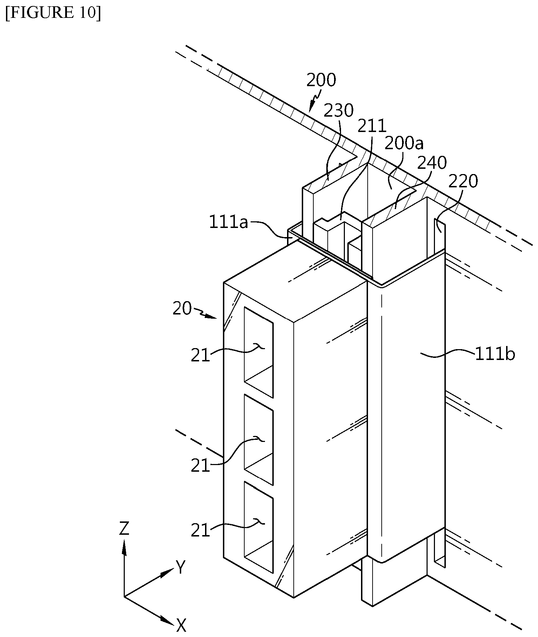

The welding jig 20 may be provided in a roughly box shape as shown in FIG. 10 and may have a through hole 21 formed to penetrate the welding jig 20. The through hole 21 may be provided in plurality. The plurality of through holes 21 may be partitioned by a barrier. The through hole 21 may serve as a passage for introducing a welding means such as a laser beam, an ultrasonic horn, a welding rod, etc., and preventing sputters or the like be generated during welding from being scattered. The welding jig 20 may include a lower surface that may face and contact the lead bonding portion 120. In addition, the welding jig 20 may be provided in a size corresponding to the lead bonding portion 120 so as to pressurize the lead bonding portion 120 as a whole.

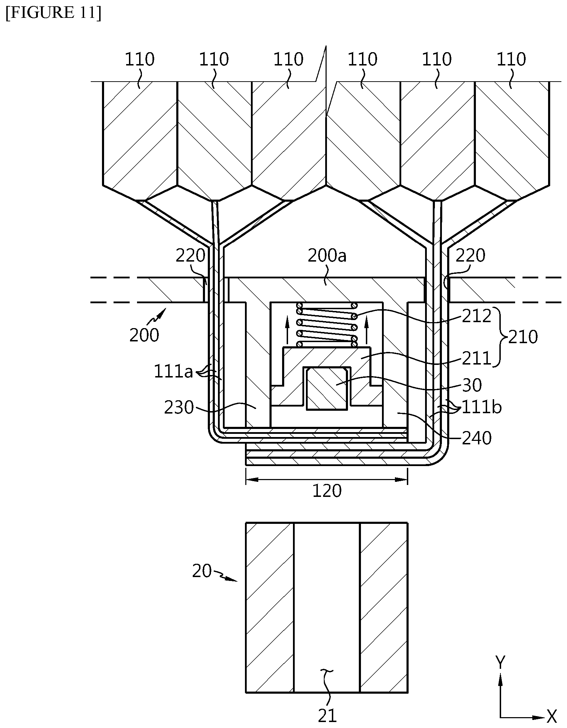

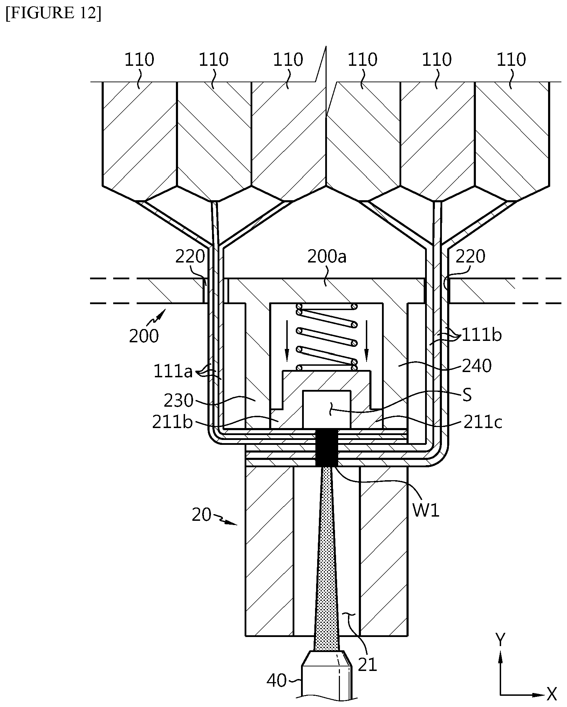

FIGS. 11 and 12 are drawings corresponding to FIGS. 8 and 9, showing the welding process of six electrode leads 111.

The electrode leads 111 of three or more battery cells 110 may be electrically connected by welding using the electrode lead welding method according to the present disclosure.

For example, as shown in FIG. 11, the positive electrode leads 111a of three battery cells 110 are drawn out to the front of the cover frame 200 through the same slit 220 and are overlapped with each other. Also, the negative electrode leads 111b of the other three battery cells 110 are drawn out to the front of the cover frame 200 through another slit 220 and are overlapped with each other.

After that, as described above, the lead bonding portion 120 is formed by pushing the three positive electrode leads 111a and the three negative electrode leads 111b into the space between the first guide plate 230 and the second guide plate 240, and bending the three positive electrode leads 111a and the three negative electrode leads 111b to be overlapped with each other.

Next, the rear surface of the lead bonding portion 120 is pressed using an elastic member, and the front surface of the lead bonding portion 120 is pressed using a welding jig 20 to perform laser welding while the six electrode leads 111 are in close contact. Then, the six battery cells 110 form a parallel- and series-connected structure (3P2S).

Meanwhile, the battery pack according to the present disclosure may include one or more battery modules according to the present disclosure. In addition, in addition to the battery modules, the battery pack according to the present disclosure may further include a pack case for accommodating the battery modules, and various devices for controlling the charging and discharging of each battery module, such as a master BMS, a current sensor, and a fuse.

The battery module according to the present disclosure may be applied to a vehicle such as an electric vehicle or a hybrid electric vehicle. That is, the vehicle may include the battery module according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

Although terms indicating directions such as upward, downward, left, right, front, and rear are used in this specification, it is obvious to those skilled in the art that these terms represent relative locations only for convenience of explanation and may vary depending on the location of the target object or the location of the observer.

## Claims

1. A battery module comprising:
a cell stack including a plurality of battery cells, each of which has an electrode lead;
a cover frame having a slit through which the electrode lead passes and configured to cover a front portion or a rear portion of the cell stack; and
a lead bonding portion provided on an outer side of the cover frame and formed by overlapping the electrode leads of the battery cells so that at least a portion of the overlapping electrode leads is welded,
wherein the cover frame includes a lead support unit configured to provide a pressing force from a rear surface of the lead bonding portion toward a front surface thereof so that the overlapping electrode leads come into close contact with the lead bonding portion.

2. The battery module according to claim 1,
wherein the lead support unit includes an elastic member that is coupled to a plate surface of the cover frame and elastically presses the lead bonding portion.

3. The battery module according to claim 2,
wherein the elastic member includes:
a support block in contact with the rear surface of the lead bonding portion; and
a spring having one end connected to the plate surface of the cover frame and the other end connected to the support block.

4. The battery module according to claim 3,
wherein the support block includes:
a spring connection portion connected to the spring;
a first lead support portion extending from one side of the spring connection portion toward the lead bonding portion; and
a second lead support portion spaced apart from the first lead support portion and extending from the other side of the spring connection portion toward the lead bonding portion.

5. The battery module according to claim 4,
wherein the spring connection portion is configured to be spaced apart from the lead bonding portion by a predetermined interval.

6. The battery module according to claim 2,
wherein the cover frame includes a first guide plate and a second guide plate spaced apart from each other and arranged side by side to protrude from the plate surface of the cover frame, and
wherein the elastic member is arranged in a space between the first guide plate and the second guide plate.

7. The battery module according to claim 6,
wherein the elastic member includes a support block in contact with the rear surface of the lead bonding portion; and a spring having one end connected to the plate surface of the cover frame and the other end connected to the support block, and
wherein the support block has a width corresponding to an interval between the first guide plate and the second guide plate.

8. The battery module according to claim 1,
wherein the cover frame has the slit on at least one of a left side and a right side of the lead support unit.

9. An electrode lead welding method for bonding electrode leads between battery cells, comprising:
preparing a cover frame, which includes a slit through which the electrode lead passes and an elastic member configured to elastically press the electrode lead;
inserting two or more electrode leads into the slit and drawing the electrode leads from a rear side of the cover frame to a front side thereof;
compressing the elastic member;
bending the two or more electrode leads that have passed through the slit to be overlapped with each other to form a lead bonding portion, and positioning the lead bonding portion in front of the compressed elastic member;
releasing the compression of the elastic member so that a rear surface of the lead bonding portion is pressed and pressing a front surface of the lead bonding portion using a welding jig so that the front surface of the lead bonding portion is pressed; and
performing welding on the lead bonding portion through a through hole provided in the welding jig.

10. The electrode lead welding method according to claim 9,
wherein the elastic member includes a support block in contact with the rear surface of the lead bonding portion; and a spring having one end connected to a plate surface of the cover frame and the other end connected to the support block.

11. The electrode lead welding method according to claim 10,
wherein the support block is formed to be convex with respect to the rear surface of the lead bonding portion to have a pocket space therein, and
wherein a spring compressing jig is inserted into the pocket space and the support block is pushed using the spring compressing jig to compress the spring toward the plate surface of the cover frame.

12. The electrode lead welding method according to claim 9,
wherein the cover frame includes a first guide plate and a second guide plate configured to protrude from a plate surface of the cover frame and spaced apart from each other, and
wherein the elastic member is arranged in a space between the first guide plate and the second guide plate.

13. The electrode lead welding method according to claim 12,
wherein the elastic member includes a support block in contact with the rear surface of the lead bonding portion; and a spring having one end connected to the plate surface of the cover frame and the other end connected to the support block, and
wherein the support block has a width corresponding to an interval between the first guide plate and the second guide plate.

14. The electrode lead welding method according to claim 9,
wherein the slit is provided on at least one of a left side and a right side of the elastic member based on the elastic member.

15. A battery pack comprising the battery module according to any one of claims 1 to 8.
